# EUROPEAN PATENT APPLICATION

(11) **EP 1 256 966 A1**
(43) Date of publication of application: **13.11.2002**
(21) Application number: 01111054.1
(22) Date of filing: 08.05.2001
(51) Int. Cl.: H01G 9/058

(54) **Electric double layer capacitor and method for manufacturing the same**

(71) Applicant: Ness Capacitor Co., Ltd, Suwon-si, Gyeonggi-do (KR)
(72) Inventor: Park, Sung-Chul, Chungjoo-si, Chungchong-bukdo (KR); Jung, Yong-Ho, Daeduk-gu, Taejeon-si (KR); Kim, Young-Ho, Bundang-gu, Sungnam-si, Gyeonggi-do (KR); Kim, Sun-Wook, Seoul (KR)
(74) Representative: Weitzel, Wolfgang, Dr.-Ing.

(57) **Abstract**

An electric double layer capacitor having increased electrode density and decreased resistance and a method for manufacture the same are disclosed. A binder comprising butadiene-styrene, carboxymethyl cellulose, and polytetrafluoroethylene is prepared and mixed with activated carbon powder and carbon black to obtain a slurry mixture. The mixture is then coated on a charge collecting body to form an electrode and subjected to a pressing process to obtain a resulting electric double layer capacitor having 20% increased electrode density and 50% reduced resistance.

## Description

### Background of the Invention

### 1. Field of the Invention

The present invention relates to an electric double layer capacitor EDLC and a method for manufacturing the same, and more particularly to an electric double layer capacitor and a method for manufacturing an electric double layer capacitor having improved physical characteristics and reduced resistance.

### 2. Description of the Related Art

Generally, capacitors or condensers are widely classified into electrostatic, electrolyte, and electrochemical capacitors. Electrostatic capacitors are further classified into ceramic, glass, and mica capacitors, which typically have a capacitance about 1.0 to 10µF, and common electrolyte capacitors such as aluminum electrolyte or tantalium capacitors have a capacitance of 100 times of electrostatic condensers. For electrochemical capacitors which is known as super capacitors, electric double layer and metal-oxide pseudo-capacitors having a range of capacitance of about 1mF to 3000F has been developed.

Electric double layer capacitors are typically manufactured by attaching or incorporating ground activated carbon powder and a conductive material such as carbon black to the charge collecting body to form an electrode. Generally, a binder is utilized to attach the activated carbon power and conductive material to the charge collecting body. Polysaccharides or fluorides are widely used as a binder, and depending on the type of solvent utilized, binders are classified as water soluble or organic binders.

A method of manufacturing an electric double layer capacitor by utilizing the water soluble binder is disclosed by Japanese Patent No. 04-65814, in which a water soluble cellulose binder is utilized to attach or coat activated carbon powder to a conductive substrate.

Further, U.S. Patent No. 5,150,283 discloses a method of manufacturing an electric double layer capacitor by using a water soluble polysaccharide binder.

Currently, there are various methods for manufacturing an electric double layer capacitor such as a method of forming a polarized electrode by forming a metal charge collecting body on carbon fiber or activated carbon fiber, and method of press forming carbon paste on a conductive rubber or a metal charge collecting body, while in another method, a slurry having activated carbon powder is coated on the metal charge collecting body.

However, in the method coating the metal charge collecting body with slurry, because carboxymethyl cellulose (CMC) which has a high degree of hardness is utilized as a binder, the manufacturing process is difficult to carry out and the resulting capacitors have a high resistance.

U.S. Patent No. 5,682,288 discloses an electrode formed by extrusion method which utilizes a fluoride binder, polytetrafluoroethylene (PTFE). Although polytetrafluoroethylene binder exhibits a superior characteristic over the carboxymethyl cellulose in terms of being utilized as a binder, it is difficult to obtain a minimum electrode thickness due to the necessary implementation of paste process, which is required when polytetrafluoroethylene is utilized in the manufacturing process.

Further, the manufacturing method utilizing carbon fiber or activated carbon fiber has an advantage in that the capacitors have low internal resistance and its electrodes also have a low resistance. However, because their filling density (apparent density) is lower than 0.3g/cm³, it is difficult to achieve a high energy density with the capacitors obtained by this method.

In contrast, in the manufacturing method utilizing carbon paste, although it is possible to increase the charging density of above 0.9g/cm³ to achieve a high energy density, the use of the capacitors is limited since they cannot be utilized as a high power (output) capacitors due to their high internal resistance. More, there is an additional drawback in that it is difficult to apply a light weight binders such as polysaccharides in the accompanying press process.

Thus, the selection of an appropriate binder which can be suitably applied in the above press process is a critical factor in determining the characteristics of the electrodes in the electric double layer capacitors.

### Summary of the Invention

In view of the foregoing, it is an object of the present invention to provide an electric double layer capacitor having an increased electrode density and decreased resistance.

It is another object of the invention to provide a method for manufacturing the above electric double layer capacitor by utilizing a binder comprising butadiene and polysaccharide copolymers. The binder may further comprise a fluoride copolymer.

In order to achieve the above object, the present invention provides an electric double layer capacitor, in which the capacitor has an electrode which comprise an active carbon powder and a conductive material attached to a charge collecting body by a binder comprising butadiene and polysaccharide copolymers.

In order to achieve another object, the present invention provides a method for manufacturing an electric double layer capacitor. The method comprises the steps of forming a binder by mixing butadiene and polysaccharide copolymers, then the binder is mixed with an active carbon powder and a conductive material to form a mixture, which is then coated on a charge collecting body to form an electrode.

An electric double layer capacitor of the present invention having an electrode coated with activated carbon powder and conductive material by binder comprising butadiene and polysaccharide copolymers has an increased electrode density and decreased resistance. As a result, such electric double layer capacitor exhibits markedly enhanced performance.

### Description of the Preferred Embodiments

Hereinafter, preferred embodiments of the present invention will be explained in detail.

According to the present invention, a binder used for attaching an activated carbon powder and a conductive material to a charge collecting body is a combined mixture of butadiene and polysaccharide copolymers.

It is preferred that the butadiene copolymer is butadiene-styrene and the polysaccharide is carboxymethyl cellulose.

Both butadiene-styrene and carboxymethyl cellulose are attached to the charge collecting body in a respective preferred amount of about 1-6 weight% in respect to a total weight of an electrode to be formed.

If an amount of butadiene-styrene contained in the electrode is less than 1 weight%, the cohesiveness of active materials in the electrode weakens to cause detachments of fine carbon particles and current leakage in the resulting capacitor, in addition to having disadvantageous effects on the manufacturing process. Also, having the butadiene-styrene in the electrode in an amount greater than 6 weight% increases resistance to render the electrode ineffective.

Carboxymethyl cellulose in an amount of less than 1 weight% makes it difficult to carry out coating process due to an inadequate slurry characteristic obtained by the amount, and in an amount greater than 6 weight%, the resistance of the electrode increases, it becomes difficult to implement roll pressing process, and the resulting electrode becomes easily susceptible to breakage.

The above binder is then combined with an activated carbon powder and a conductive material to obtain a coating mixture.

For activated carbon powder, a starting material such as phenolic resin is ground to obtain activated carbon powder having an average size of 10µm, and for a conductive material, carbon black or acetylene black is utilized.

It is preferred that a mixing ratio of the above activated carbon powder and the conductive material is about 5:1.

Conventionally, for mixing the binder with the activated carbon power and conductive material, the binder is first dissolved in water or N-methyl pyrrolidone (NMP), then the activated carbon powder and conductive material mixed into the solution to obtain a slurry by commonly utilized mixing method. In the present invention, the binder is mixed with the activated carbon powder and conductive material by ball mixing process at room temperature.

The slurry obtained by above process is then coated on a charge collecting body to form an electrode.

According to another preferred embodiment of the present invention, the binder can further comprise a fluoride copolymer in addition to butadiene and polysaccharide copolymers.

It is preferred that the fluoride copolymer is polytetrafluoroethylene and its preferred composition amount is about 1-6 weight% in respect to a total weight of the electrode.

Accordingly, a binder comprising butadiene-styrene in an amount of about 1-6 weight%, carboxymethyl cellulose in an amount of about 1-6 weight%, and polytetrafluoroethylene in an amount of about 1-6 weight%, in respect to a total weight of the electrode, can also be utilized as a preferred binder of the present invention.

Polytetrafluoroethylene added in an amount exceeding the range of amount shown above also makes it difficult to obtain an adequate slurry characteristics.

Additionally, when polytetrafluoroethylene is constituted in the binder, a press process is further implemented in the present invention, after coating the charge collecting body with slurry.

Generally, butadiene copolymers provide a high adhesiveness of activated materials in the electrode to render an uniformed electrode surface, which makes it easier to carry out the subsequent process of manufacturing the capacitors. However, in order to optimize the amount of binders utilized and to enhance the physical properties of capacitors such as electrode density and resistance, it is necessary to combine butadiene copolymer with polysaccharide or fluoride copolymers.

In the present invention, because a binder having both butadiene and polysaccharide copolymers are utilized to manufacture electric double layer capacitor, a less amount of binder is needed and the resistance of the capacitors is reduced. As a result, the capacitance electric double layer capacitors can be increased. Further, a binder comprising a fluoride copolymer in addition to butadiene and polysaccharide copolymers makes to possible to subject the mixture coated on the charge collecting body to a press process for markedly increasing the electrode density and for decreasing the resistance of the electrode.

Additionally, in the conventional binders comprising polysaccharide and fluoride copolymers, an amount of 10 weight% in respect to a total weight of electrode must be utilized to obtain an electrode having a predetermined mechanical strength and adhesiveness. In comparison, in the present invention, such predetermined mechanical strength and adhesiveness can be obtained by utilizing a binder comprising a water-soluble butadiene such as butadiene styrene in an amount equal to or less than 5 weight%. Specifically, by utilizing butadiene-styrene in a binder, the amount of binder can be reduced to half and still obtain an adequate adhesiveness required in the electrode.

Further, because activated carbon powder has a wide specific surface area compared to other active materials in the electrode, it requires a large amount of conventional binders to obtain an adequate adhesiveness. However, according to the present invention, due to a high adhesive property of butadiene-styrene over the conventional binders, a less amount of a binder having butadiene-styrene composition can be utilized to obtain a desired adhesiveness. As a result, the amount of active materials in the electrode can be increased to achieve an electric double layer capacitor having increased capacitance.

In the manufacturing process utilizing conventional binders comprising polysaccharide or fluoride copolymers, because it is difficult to carry out a pressing process for increasing the electrode density, a mere density of 0.35 to 0.5g/cc are generally obtained according to the type of carbon material utilized. Further, in implementation of additional and subsequent processes for increasing the electrode density, which commonly results in decreased adhesiveness and change in the electrode surface, a desired or anticipated electrode density is rarely obtained. Particularly, in electric double layer capacitors, the electrodes having impregnated with electrolytes tend to peel-off in portions during expansion of its volume. Such occurrence also occurs for a binder which only has butadiene-styrene. Thus, conventionally, increasing the electrode density has been an extremely difficult process.

To overcome the above described problem of increasing the electrode density, the present invention provides a binder comprising butadiene-styrene, carboxymethyl cellulose, and polytetrafluoroethylene. By utilizing the binder, the pressing process can be effectively carried out to increase the electrode density without the problems prevalent in the conventional manufacturing process.

More particularly, according to the present invention, utilization of a binder comprising butadiene-styrene, carboxymethyl cellulose, and polytetrafluoroethylene provides an electric double layer capacitor having an increased electrode density of about 0.6-1.0g/cc, about 50% decreased resistance, and about 20% increased capacitance per volume.

Conventionally, the pressing process is more effective when carried out in high temperatures under pressure. However, at high temperatures, the physical properties of binders tend to change to present a high risk of weakening the adhesiveness of the binders. In contrast, a binder of the present invention having a thermally stable polytetrafluoroethylene makes it possible to carry out the pressing process while maintaining the adhesiveness of the mixture attached to the charge collecting body for increasing the electrode density. As a result, an electric double layer capacitor having improved physical characteristics can be obtained.

### Preferred Embodiment 1

A number of binders were prepared by mixing carboxymethyl cellulose (sodium carboxymethyl cellulose; Aldrich Company) with butadiene-styrene copolymer (BM-400H; Nippon Zeon Company). Then, the respective binders were evenly mixed with activated carbon powder and carbon black to obtain a slurry mixture. The mixture was then coated on a charge collecting body to form an electrode. Thereafter, a pressing process was carried out at 150 °C by utilizing a comma roll coater to obtain a resulting electric double layer capacitor.

Table 1 shows binders having different composition amounts of carboxymethyl cellulose (CMC) and butadiene-styrene (BS), while the composition amount of the activated carbon powder and carbon black was same for each binders. The electrode density and equivalent resistance were measured for the respective binders and are shown in Table 1 below.

The composition amount (weight%) indicated in Table 1 is in respect to the total weight of the electrode.

**Table 1**

| | CMC weight% | BS weight% | Resistance (Ω cm²) | Electrode density (g/cm³) |
|---|---|---|---|---|
| Binder 1 | 2 | 2 | 8 | 0.50 |
| Binder 2 | 2 | 8 | 14 | 0.52 |
| Binder 3 | 4 | 2 | 12 | 0.47 |
| Binder 4 | 4 | 8 | 16 | 0.50 |

As shown by Table 1, as the binder composition ratio increased, the resistance increased and the electrode density showed a slight increase. It was observed that the active materials on the electrode showed a strong adhesiveness and did not detached from the electrode as the composition amount of butadiene-styrene increased in the binders, and a large increase in resistance was also observed. However, the binder having such butadiene-styrene composition made it easier to carry out pressing process more effectively compared a binder having only carboxymethyl cellulose composition present in an amount of 10 weight%.

By utilizing the above binders comprising butadiene-styrene and carboxymethyl cellulose, no significant increase in electrode density was observed in the subsequent pressing process and the mixture coated on the charge collecting body exhibited peeling.

### Preferred Embodiment 2

A number of binders were prepared by mixing 2 weight% of carboxymethyl cellulose (sodium carboxymethyl cellulose; Aldrich Company) with 2 weight% of butadiene-styrene copolymer (BM-400H; Nippon Zeon Company) and 2 weight%, 4 weight% and 6 weight% of polytetrafluoroethylene (D-1; Daikin Company), in respect to a total weight of electrode. Then, an electrode was formed by the same process as outlined in Preferred Embodiment 1 to obtain a resulting electric double layer capacitor.

The electrode density and equivalent resistance were measured for the respective binders and are shown in Table 2 below. The composition amount (weight%) indicated in Table 2 is in respect to the total weight of the electrode, and polytetrafluoroethylene is indicated by PTFE.

**Table 2**

| | CMC weight% | BS weight% | PTFE weight% | Resistance (Ω cm²) | Electrode density (g/cm³) |
|---|---|---|---|---|---|
| Binder 5 | 2 | 2 | 2 | 2 | 0.55 |
| Binder 6 | 2 | 2 | 4 | 2 | 0.57 |
| Binder 7 | 2 | 2 | 6 | 5 | 0.60 |
| Binder 8 | 2 | 4 | 2 | 6 | 0.56 |

It was observed that the electrode density increased as the binder composition amount increased, and it was determined that polytetrafluoroethylene played an important function of increasing the electrode density as the electrode density increased when the composition amount of polytetrafluoroethylene in the binders was increased.

Although the electrodes having coated with a mixture having binders 5 and 6 exhibited a little resistance, the surfaces of the electrodes were uneven and rough compared to the electrodes having coated with a mixture having binders 7 and 8.

### Preferred Embodiment 3

A number of binders were prepared by mixing 4 weight% of carboxymethyl cellulose (sodium carboxymethyl cellulose; Aldrich Company) with 4 weight% of butadiene-styrene copolymer (BM-400H; Nippon Zeon Company) and 2 weight%, 4 weight% and 6 weight% of polytetrafluoroethylene (D-1; Daikin Company), in respect to a total weight of electrode. Then, an electrode was formed by the same process as outlined in Preferred Embodiment 1 to obtain a resulting electric double layer capacitor.

The electrode density and equivalent resistance were measured for the respective binders and are shown in Table 3 below. The composition amount (weight%) indicated in Table 3 is in respect to the total weight of the electrode.

**Table 3**

| | CMC weight% | BS weight% | PTFE weight% | Resistance (Ω cm²) | Electrode density (g/cm³) |
|---|---|---|---|---|---|
| Binder 9 | 4 | 4 | 2 | 4 | 0.60 |
| Binder 10 | 4 | 4 | 4 | 4 | 0.62 |
| Binder 11 | 4 | 4 | 6 | 5 | 0.65 |
| Binder 12 | 4 | 2 | 2 | 5 | 0.57 |

It was observed that the electrode density showed a significant increase over Preferred Example 2 when the composition amount of the binder was increased, and it was determined that the increase in the composition amount of the binder caused increase in electrode density and decrease in resistance. Further, when comparing the binders of the present preferred example to the binders in Preferred Example 1, the drastic decrease in resistance and increase in electrode density are determined to be attributed by having polytetrafluoroethylene in the binder and by the subsequent pressing process which is also made more efficient by polytetrafluoroethylene.

The capacitance and resistance of an electric double layer capacitor having an electrode coated with a mixture comprising the composition of binder 10 were measured to be 55F and 20mΩ, which is a drastic improvement over the conventional electric double layer capacitors which typically have 45F capacitance and 40mΩ resistance. Such improvement is also attributed by malleable property of a binder having butadiene. Thus, the strong adhesiveness and flexibility of butadiene functions to eventually increase the electrode density.

### Preferred Embodiment 4

A number of binders were prepared by mixing 6 weight% of carboxymethyl cellulose (sodium carboxymethyl cellulose; Aldrich Company) with 6 weight% of butadiene-styrene copolymer (BM-400H; Nippon Zeon Company) and 2 weight%, 4 weight% and 6 weight% of polytetrafluoroethylene (D-1; Daikin Company), in respect to a total weight of electrode. Then, an electrode was formed by the same process as outlined in Preferred Embodiment 1 to obtain a resulting electric double layer capacitor.

The electrode density and equivalent resistance were measured for the respective binders and are shown in Table 4 below. The composition amount (weight%) indicated in Table 4 is in respect to the total weight of the electrode.

**Table 4**

| | CMC weight% | BS weight% | PTFE weight% | Resistance (Ω cm²) | Electrode density (g/cm³) |
|---|---|---|---|---|---|
| Binder 13 | 6 | 6 | 2 | 10 | 0.65 |
| Binder 14 | 6 | 6 | 4 | 12 | 0.75 |
| Binder 15 | 6 | 6 | 6 | 13 | 0.78 |
| Binder 16 | 2 | 6 | 6 | 9 | 0.68 |

As the composition amount of the binders was increased in the present preferred example, the adhesiveness and the electrode density were increased. Accordingly, it was determined that the energy density can be increased per unit volume. However, as shown by Table 4, a large composition amount of the binders caused increase in resistance, thus, in excessive and large amounts, it may have an adverse effect on electric double layer capacitors.

A binder composition provided by the present invention utilized by a method of manufacturing electric double layer capacitor according to present invention renders an electric double layer capacitor having 20% increased electrode density and 50% reduced resistance over the conventional capacitors. Hence, an electric double layer capacitor having an improved performance can be realized.

While the present invention has been particularly shown and described with reference to particular embodiments thereof, it will be understood by those skilled in the art that various changes in form and details may be effected therein without departing from the spirit and scope of the invention as defined by the appended claims.

## Claims

1. An electric double layer capacitor having an electrode comprising:
an active carbon powder;
a conductive material; and
a binder including butadiene and polysaccharide copolymers for attaching the active carbon powder and the conductive material to a charge collecting body.

2. An electric double layer capacitor as claimed in claim 1, wherein the butadiene copolymer is butadiene-styrene and the polysaccharide copolymer is carboxymethyl cellulose.

3. An electric double layer capacitor as claimed in claim 2, wherein the binder comprises butadiene-styrene in an amount of about 1-6 weight% and carboxymethyl cellulose in an amount of about 1-6 weight% in respect to a total weight of the electrode.

4. An electric double layer capacitor as claimed in claim 1, wherein the binder further comprises a fluoride copolymer.

5. An electric double layer capacitor as claimed in claim 4, wherein the binder comprises butadiene-styrene, carboxymethyl cellulose, and polytetrafluoroethylene.

6. An electric double layer capacitor as claimed in claim 5, wherein the binder comprises butadiene-styrene in an amount of about 1-6 weight%, carboxymethyl cellulose in an amount of about 1-6 weight%, and polytetrafluoroethylene in an amount of about 1-6 weight% in respect to a total weight of the electrode.

7. An electric double layer capacitor as claimed in claim 1, wherein the active carbon powder and the conductive material is mixed at a ratio of about 5:1.

8. A method for manufacturing an electric double layer capacitor comprising the steps of:
(a) forming a binder by mixing butadiene and polysaccharide copolymers;
(b) forming a mixture by mixing the binder with an active carbon powder and a conductive material; and
(c) forming an electrode by coating a charge collecting body with said mixture.

9. A method for manufacturing an electric double layer capacitor as claimed in claim 8, wherein the butadiene copolymer is butadiene-styrene and the polysaccharide copolymer is carboxymethyl cellulose.

10. A method for manufacturing an electric double layer capacitor as claimed in claim 9, wherein the binder comprises butadiene-styrene in an amount of about 1-6 weight% and carboxymethyl cellulose in an amount of about 1-6 weight% in respect to a total weight of the electrode.

11. A method for manufacturing an electric double layer capacitor as claimed in claim 8, wherein the binder further comprises a fluoride copolymer.

12. A method for manufacturing an electric double layer capacitor as claimed in claim 11, wherein the binder comprises butadiene-styrene, carboxymethyl cellulose, and polytetrafluoroethylene.

13. A method for manufacturing an electric double layer capacitor as claimed in claim 12, wherein the binder comprises butadiene-styrene in an amount of about 1-6 weight%, carboxymethyl cellulose in an amount of about 1-6 weight%, and polytetrafluoroethylene in an amount of about 1-6 weight% in respect to a total weight of the electrode.

14. A method for manufacturing an electric double layer capacitor as claimed in claim 8, wherein the step (c) of forming the electrode further comprises the sub-step of pressing said mixture coated on the charge collecting body.
